# EUROPEAN PATENT SPECIFICATION

(11) **EP 3 677 530 B1**
(45) Date of publication and mention of the grant of the patent: **24.07.2024**
(21) Application number: 18851663.7
(22) Date of filing: 24.08.2018
(51) Int. Cl.: F28D 20/00, B65D 90/02, B65D 90/501

(54) **DOUBLE-WALLED HIGH-TEMPERATURE MOLTEN SALT STORAGE TANK HAVING INTERSTITIAL SPACE**
DOPPELWANDIGER HOCHTEMPERATURSCHMELZSALZAUFBEWAHRUNGSTANK MIT INTERSTITIELLEM RAUM
RÉSERVOIR DE STOCKAGE DE SEL FONDU À HAUTE TEMPÉRATURE À DOUBLE PAROI COMPRENANT UN ESPACE INTERSTITIEL

(30) Priority: 31.08.2017 CN 201710776816
(43) Date of publication of application: 08.07.2020
(73) Proprietor: China Chengda Engineering Co. Ltd, Sichuan 610041 (CN); Jiangsu Xin Chen Thermal Technology Co., Ltd, Jiangsu 224007 (CN)
(72) Inventor: LIU, Bin, Chengdu Sichuan 610041 (CN); WANG, Ren, Chengdu Sichuan 610041 (CN); HUANG, Zemao, Chengdu Sichuan 610041 (CN); PENG, Xifeng, Jiangsu Province, P.R (CN); LI, Kui, Chengdu Sichuan 610041 (CN); ZENG, Yufeng, Chengdu Sichuan 610041 (CN); WANG, Bin, Chengdu Sichuan 610041 (CN); SONG, Shixiong, Jiangsu Province, P.R (CN); LIU, Rentao, Chengdu Sichuan 610041 (CN); CHEN, Yuda, Jiangsu Province, P. R (CN); WANG, Zhituo, Chengdu Sichuan 610041 (CN); YOU, Siliang, Jiangsu Province, P.R (CN); TANG, Jin, Chengdu Sichuan 610041 (CN); WANG, Rui, Chengdu Sichuan 610041 (CN)
(74) Representative: Ipside
(86) International application number: PCT/CN2018/102148
(87) International publication number: WO 2019/042222

(56) References cited:
- CN-A- 105 346 878
- CN-A- 107 380 780
- CN-U- 202 346 221
- CN-U- 202 784 409
- CN-U- 205 240 395
- CN-U- 205 837 674
- CN-U- 205 931 952
- CN-U- 206 407 412
- CN-U- 207 226 152
- DE-A1- 102015 011 870
- US-A1- 2015 053 692

## Description

### Technical Field

The invention belongs to the technical field of solar thermal devices, and in particular relates to a double-layer jacket high-temperature molten salt storage tank.

### Background of the Invention

Solar thermal power generation is an important source of clean energy. At present, solar thermal power generation using molten salt as a thermal storage medium is a generally recognized scheme in the world. Molten salt can not only be used as an intermediate thermal energy carrier, but also can be stored in molten salt storage tanks to ensure continuous and stable output of electric energy without sunlight at night. As a result, solar thermal power generation is a grid-friendly power supply and solves common power application problems faced by new energy sources. High-temperature molten salt storage tanks play a key role in energy storage for power generation. Whether the insulation effect of molten salt storage tanks is good and whether devices are safe and reliable directly affect the stable operation of power generation systems and the economic benefit of power stations.

At present, there are only two solar thermal tower power stations in the world that are put into commercial operation. A high-temperature molten salt storage tank at Crescent Dunes in the United States leaked in October 2016 and was shut down for several months. Similarly, Gemasolar Power Station, the world's first solar power station that can generate electricity 24 hours a day in Seville, Spain, was shut down for more than several months in early 2017 due to an accident involving a high-temperature molten salt storage tank. Since the maintenance of a storage tank requires not only emptying the storage tank, but also natural cooling before maintenance can begin, it is very time consuming.

The existing high-temperature molten salt storage tanks generally adopt the structural form of conventional cylindrical stainless steel storage tanks with external insulation materials, which mainly have the following technical problems: 1. the insulation materials are arranged on the outside of tank bodies and are only protected by insulation aluminum sheets or iron sheets, so the high-temperature molten salt storage tanks are vulnerable to rain, snow and strong winds and inevitably need regular maintenance; 2. the outside of the tank bodies is covered with insulation materials, thus deformation of the tank bodies and weld leakage cannot be effectively observed and detected in time; 3. preheating of the tank bodies is difficult and takes a long time, and it is difficult to achieve uniform temperature in all parts of the tank bodies; 4. due to uneven heating of tank roofs and tank walls, joints between the tank roofs and the tank walls have high differential temperature stress and are easy to be destroyed; 5. the working temperature of the tank roofs is close to that of high-temperature molten salt, which makes it difficult to design and manufacture; and 6. tank floor insulation materials are directly arranged on tank foundations, and additional protection is required to avoid the influence of rainwater; in addition, cold air pipes have to pass through or bypass tank foundation beams, thus the tank foundations have the disadvantages of difficult design, complicated structures and high construction cost.

A warm storage tank consisting of an outer tank and inner tank is known from patent document CN 205931952 U. The technique disclosed in this document consists of an insulation layer and an air layer situated between the inner and outer tank. This document doesn't disclose any particular roof arrangement, especially regarding a roof of an inner tank.

### Summary of the Invention

To address the above problems, the purpose of the invention is to provide a double-layer jacket high-temperature molten salt storage tank which has a long service life, can effectively prevent direct leakage of molten salt, can provide a release space for thermal deformation of the tank body, and facilitate preheating of the tank body.

The technical solution of the invention is realized by a double-layer jacket high-temperature molten salt storage tank having the features defined in claim 1. It comprises a tank body, a tank roof and a tank floor, wherein the tank body consists of an inner tank and an outer tank, a jacket space is formed between the inner tank and the outer tank, a tank insulating layer is arranged at the inner side of the outer tank in the jacket space, and an air layer is reserved between the tank insulating layer and the inner tank.

In a variant of the double-layer jacket high-temperature molten salt storage tank of the invention is the inner tank has a stainless steel structure that is resistant to high temperature and corrosion and is subject to static pressure of molten salt, and the outer tank is not in contact with the molten salt, and is thus not subject to the static pressure of the molten salt.

In a variant of the double-layer jacket high-temperature molten salt storage tank of the invention the tank insulating layer arranged at the inner side of the outer tank is made of a light insulation fiber product.

The double-layer jacket high-temperature molten salt storage tank of the invention is characterized in that the top of the inner tank has no tank roof, and the inner tank freely expands outward with increasing temperature.

In an embodiment not encompassed by the wording of the claims, the double-layer jacket high-temperature molten salt storage tank is characterized in that a molten salt storage tank level detector, a temperature detector and a monitor for monitoring deformation of the inner tank and weld leakage are arranged in the air layer of the jacket space.

In an embodiment not encompassed by the wording of the claims, the double-layer jacket high-temperature molten salt storage tank is characterized in that an inner tank roof plate is arranged on the top of the inner tank, a refractory fiber layer is laid on the inner tank roof plate, one end of the tank roof is connected with an upper end of the tank body, and the tank roof is connected with the inner tank roof plate through a hanger rod. In a variant of the double-layer jacket high-temperature molten salt storage tank of the invention the tank floor consists of an inner tank floor and an outer tank floor, a tank floor insulating layer is arranged between the inner tank floor and the outer tank floor, and the outer tank floor is mounted on a reinforced concrete foundation. In a variant of the double-layer jacket high-temperature molten salt storage tank of the invention a cold air pipe of the tank floor is arranged on the outer tank floor, and the cold air pipe is arranged at a certain distance from the reinforced concrete foundation.

The tank body of the invention adopts a double-layer structure and a composite insulation structure is formed by using the insulating layer and the air layer, thereby avoiding the influence of high temperature on the outer tank and enabling the inner tank to expand freely without being restricted by the insulating layer. Insulation materials of the tank roof, a tank wall and the tank floor are arranged in an outer steel shell, thus effectively avoiding the influence of exposure of existing insulation materials on the performance of the insulation materials and prolonging the service life of the insulation materials.

Compared with the prior art, the invention has the following technical effects:
1. The invention is beneficial to free expansion of the inner tank, avoids the influence of thermal expansion of the inner tank on the insulating layer, and avoids stress caused by the insulation material restricting expansion of the inner tank.
2. Due to the double-layer structure of the tank body, the construction workload is large, and cross operation is required for construction of the insulation material and installation of the tank body. The arrangement of the air layer leaves enough space for the installation and construction, so that the construction of the insulation material of the outer shell wall is convenient, and the construction period is greatly shortened.
3. The tank body of the double-layer jacket high-temperature molten salt storage tank of the invention follows the method of construction from the outer tank to the inner tank. Due to the protection of the outer tank, the problem of outdoor operation of the inner stainless steel tank, which is the most difficult, is avoided, and better construction conditions are created for the construction of the inner tank. The recent accidents in molten salt storage tanks abroad have made people realize that the manufacture of high-temperature molten salt storage tanks, especially in welding, should be highly regarded. Large storage tanks must be installed and welded on site, but field welding is susceptible to weather factors. With the protection of the outer tank, the inner stainless steel tank can be welded uninterruptedly in all weather conditions and at any time. When a solar thermal power generation project is built in an area with harsh weather conditions, the construction period can be basically unaffected by the weather by using double-layer jacket tanks.
4. All insulation materials of the double-layer jacket high-temperature molten salt storage tank of the invention, including insulation materials of the ceiling of the tank roof, the tank wall lining and the tank floor, are arranged in the metal shell of the outer tank. The shell of the outer tank can effectively protect the materials from the influence of weather, does not need maintenance in theory, can truly realize the service life of the insulation materials and the tank body, and meets the requirement of continuous operation of the storage tank for 30 years without shutdown.
5. The double-layer jacket high-temperature molten salt storage tank of the invention is also provided with a cold air pipe under the insulating layer of the tank floor, and the cold air pipe is arranged in the metal shell of the outer tank floor, so that the foundation of the outer tank floor does not need to take the influence of high temperature into account and is not affected by the arrangement of the cold air pipe, and a conventional large tank foundation can be used, which reduces the design difficulty and construction cost of the tank foundation.
6. The molten salt storage tank level detector, the temperature detector and other instruments are arranged in the jacket space of the invention for distributed real-time online monitoring of the level, temperature, strain and other parameters of the storage tank to ensure long-term operation of the storage tank. Meanwhile, an online leakage warning system can also be arranged to predict possible hazardous conditions of the inner tank such as deformation of the inner tank and weld leakage through online monitoring means such as optical fiber and temperature detection.
7. Before operation, the molten salt storage tank of the invention must be preheated to prevent solidification of molten salt entering the tank when in contact with the cold tank body, and reduce thermal impact of high temperature of the molten salt on the tank body. The most economical way to preheat the tank body is to introduce hot air into the tank for preheating. However, when the size of the tank body is large, hot air cannot be evenly distributed, thus the problem of uneven temperature of the tank body occurs easily. Due to the large size of the tank body, the flow rate of hot air in the whole tank is extremely low, and basically, heat transfer can be realized only through heat conduction of the air, thus the heat transfer efficiency is very low. Through introduction of hot air into the annular jacket space, the invention can realize even heating of the tank wall by simply using a hot air distributor. In addition, as the jacket space is much smaller than the tank body, the hot air and the tank wall can realize convective heat transfer, and the heat transfer efficiency is high, thus effectively solving the problem of preheating of the large tank.
8. Through special structure design and selection of a suitable refractory insulation material, the jacket space between the inner tank and the outer tank of the invention can withstand direct immersion of high-temperature molten salt for a certain period of time. Molten salt leaked from the inner tank and cracked welds can be stored in the jacket space, avoiding the problem of environmental pollution due to direct leakage of high-temperature molten salt into the environment, gaining time for accident handling and greatly improving the safety of the molten salt storage tank.

### Brief description of the Drawings

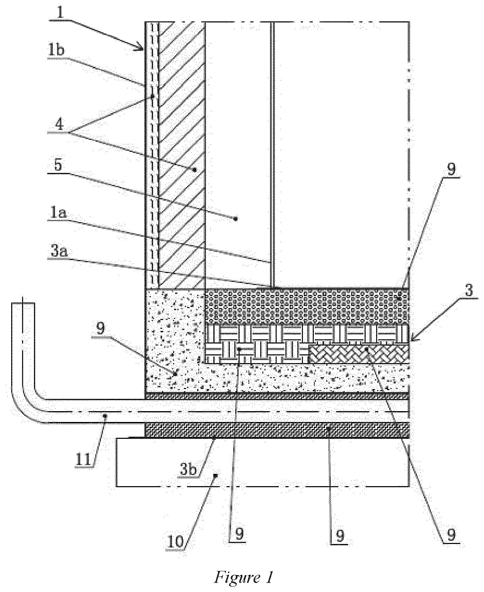

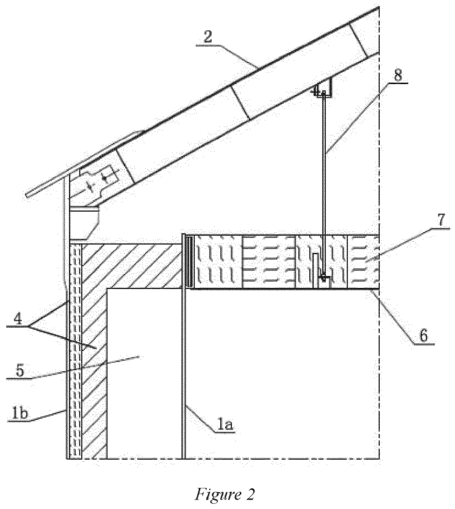

Figure 1 and Figure 2 are structural diagrams of the invention.

Marks in the figures: 1-tank body, 1a-inner tank, 1b-outer tank, 2-tank roof, 3-tank floor, 3a-inner tank floor, 3b-outer tank floor, 4-tank insulating layer, 5-air layer, 6-inner tank roof plate, 7-refractory fiber layer, 8-hanger rod, 9-tank floor insulating layer, 10-reinforced concrete foundation, 11-cold air pipe.

### Detailed Description of Embodiments

The invention will be described in detail in combination with accompanied drawings.

The invention will be further described in detail in combination with accompanied drawings and examples for clear understanding of the purpose, technical solution and advantages of the invention. It should be understood that various embodiments described herein are only used to explain the invention rather than defining the invention.

As shown in Figure 1 and Figure 2, a double-layer jacket high-temperature molten salt storage tank comprises a tank body 1, a tank roof 2 and a tank floor 3. The tank body 1 consists of an inner tank 1a and an outer tank 1b, an inner tank roof plate 6 is arranged on the top of the inner tank 1a, a refractory fiber layer 7 is laid on the inner tank roof plate 6, one end of the tank roof 2 is connected with an upper end of the tank body 1, and the tank roof 2 is connected with the inner tank roof plate 6 through a hanger rod 8.

The inner tank 1a has a stainless steel structure that is resistant to high temperature and corrosion and is subject to static pressure of molten salt; and the outer tank 1b is not in contact with the molten salt, is not subject to the static pressure of the molten salt, has no need for high temperature resistance and corrosion resistance, can be made of cheap ordinary carbon steel and is exposed to ambient environment. A jacket space is formed between the inner tank 1a and the outer tank 1b, a tank insulating layer 4 is arranged at the inner side of the outer tank 1b in the jacket space, and an air layer 5 is reserved between the tank insulating layer 4 and the inner tank 1a. The tank insulating layer 4 arranged at the inner side of the outer tank 1b is made of a light insulation fiber product such as ceramic fiber product, and has good insulation performance. The arrangement of the tank insulating layer avoids heat loss of the storage tank and meets the process requirements of heat storage and energy storage. Meanwhile, the tank insulating layer isolates high temperature, so that the outer tank does not need to withstand high temperature and is not in contact with molten salt. Therefore, the outer tank can be made of ordinary carbon steel. The top of the inner tank 1a has no tank roof 2, and the inner tank 1a can freely expand outward with increasing temperature. A molten salt storage tank level detector, a temperature detector and a monitor for monitoring deformation of the inner tank 1a and weld leakage are arranged in the air layer 5 of the jacket space.

The tank floor 3 consists of an inner tank floor 3a and an outer tank floor 3b, a tank floor insulating layer 9 is arranged between the inner tank floor 3a and the outer tank floor 3b, and the outer tank floor 3b is mounted on a reinforced concrete foundation 10. A cold air pipe 11 of the tank floor 3 is arranged on the outer tank floor 3b, and the cold air pipe 11 is arranged at a certain distance from the reinforced concrete foundation 10.

The above mentioned examples are only preferred examples of the invention and not used to limit the invention which is defined by the appended claims.

## Claims

1. A double-layer jacket high-temperature molten salt storage tank, comprising a tank body (1), a tank roof (2) and a tank floor (3), wherein the tank body (1) consists of an inner tank (1a) and an outer tank (1b), a jacket space is formed between the inner tank (1a) and the outer tank (1b), a tank insulating layer (4) is arranged at the inner side of the outer tank (1b) in the jacket space, and an air layer (5) is reserved between the tank insulating layer (4) and the inner tank (1a),
**characterized in that** the top of the inner tank (1a) has no tank roof, and **in that** the inner tank (1a) is able to freely expand outward with increasing temperature.

2. The double-layer jacket high-temperature molten salt storage tank according to claim 1, **characterized in that** the inner tank (1a) has a stainless steel structure that is resistant to high temperature and corrosion and is subject to static pressure of molten salt when in use with molten salt, and the outer tank (1b) is not in contact with the molten salt when in use with molten salt, and is thus not subject to the static pressure of the molten salt when in use with molten salt.

3. The double-layer jacket high-temperature molten salt storage tank according to claim 1, **characterized in that** the tank insulating layer (4) arranged at the inner side of the outer tank (1b) is made of a light insulation fiber product.

4. The double-layer jacket high-temperature molten salt storage tank according to any of claims 1 to 3, **characterized in that** the tank floor (3) consists of an inner tank floor (3a) and an outer tank floor (3b), a tank floor insulating layer (9) is arranged between the inner tank floor (3a) and the outer tank floor (3b), and the outer tank floor (3b) is mounted on a reinforced concrete foundation (10).

5. The double-layer jacket high-temperature molten salt storage tank according to claim 4, **characterized in that** a cold air pipe (11) of the tank floor (3) is arranged on the outer tank floor (3b), and the cold air pipe (11) is arranged at a certain distance from the reinforced concrete foundation (10).

## Patentansprüche

1. Hochtemperatur-Salzschmelzelagertank mit doppelwandiger Ummantelung, der einen Tankkörper (1), ein Tankdach (2) und einen Tankboden (3) umfasst, wobei der Tankkörper (1) aus einem Innentank (1a) und einem Außentank (1b) besteht, ein Ummantelungsraum zwischen dem Innentank (1a) und dem Außentank (1b) ausgebildet ist, eine Tankisolierschicht (4) an der Innenseite des Außentanks (1b) im Ummantelungsraum angeordnet ist, und eine Luftschicht (5) zwischen der Tankisolierschicht (4) und dem Innentank (1a) vorgesehen ist,
**dadurch gekennzeichnet, dass** die Oberseite des Innentanks (1a) kein Tankdach aufweist, und dadurch, dass der Innentank (1a) dazu in der Lage ist, sich bei zunehmender Temperatur frei nach außen auszudehnen.

2. Hochtemperatur-Salzschmelzelagertank mit doppelwandiger Ummantelung nach Anspruch 1, **dadurch gekennzeichnet, dass** der Innentank (1a) eine Edelstahlstruktur aufweist, die gegen hohe Temperaturen und Korrosion beständig ist und bei der Verwendung mit Salzschmelze dem statischen Druck der Salzschmelze ausgesetzt ist, und der Außentank (1b) bei der Verwendung mit Salzschmelze nicht in Kontakt mit der Salzschmelze steht und somit bei der Verwendung mit Salzschmelze nicht dem statischen Druck der Salzschmelze ausgesetzt ist.

3. Hochtemperatur-Salzschmelzelagertank mit doppelwandiger Ummantelung nach Anspruch 1, **dadurch gekennzeichnet, dass** die Tankisolierschicht (4), die an der Innenseite des Außentanks (1b) angeordnet ist, aus einem leichten Isolierfaserprodukt besteht.

4. Hochtemperatur-Salzschmelzelagertank mit doppelwandiger Ummantelung nach einem der Ansprüche 1 bis 3, **dadurch gekennzeichnet, dass** der Tankboden (3) aus einem Innentankboden (3a) und einem Außentankboden (3b) besteht, eine Tankboden-Isolierschicht (9) zwischen dem Innentankboden (3a) und dem Außentankboden (3b) angeordnet ist, und der Außentankboden (3b) auf einem Stahlbetonfundament (10) montiert ist.

5. Hochtemperatur-Salzschmelzelagertank mit doppelwandiger Ummantelung nach Anspruch 4, **dadurch gekennzeichnet, dass** ein Kaltluftrohr (11) des Tankbodens (3) auf dem Außentankboden (3b) angeordnet ist und das Kaltluftrohr (11) in einem gewissen Abstand zum Stahlbetonfundament (10) angeordnet ist.

## Revendications

1. Réservoir de stockage de sel fondu à haute température à chemise à double couche, comprenant un corps de réservoir (1), un dessus de réservoir (2) et un fond de réservoir (3), dans lequel le corps de réservoir (1) consiste en un réservoir intérieur (1a) et un réservoir extérieur (1b), un espace de chemise est formé entre le réservoir intérieur (1a) et le réservoir extérieur (1b), une couche d'isolation de réservoir (4) est agencée au niveau du côté intérieur du réservoir extérieur (1b) dans l'espace de chemise, et une couche d'air (5) est réservée entre la couche d'isolation de réservoir (4) et le réservoir intérieur (1a),
**caractérisé en ce que** le sommet du réservoir intérieur (1a) n'a aucun dessus de réservoir, et **en ce que** le réservoir intérieur (1a) est capable de se dilater librement vers l'extérieur lorsque la température augmente.

2. Réservoir de stockage de sel fondu à haute température à chemise à double couche selon la revendication 1, **caractérisé en ce que** le réservoir intérieur (1a) a une structure en acier inoxydable qui est résistante à une haute température et à la corrosion et est soumise à une pression statique de sel fondu lorsqu'elle est en utilisation avec du sel fondu, et le réservoir extérieur (1b) n'est pas en contact avec le sel fondu lorsqu'il est en utilisation avec du sel fondu, et n'est ainsi pas soumis à la pression statique du sel fondu lorsqu'il est en utilisation avec du sel fondu.

3. Réservoir de stockage de sel fondu à haute température à chemise à double couche selon la revendication 1, **caractérisé en ce que** la couche d'isolation de réservoir (4) agencée au niveau du côté intérieur du réservoir extérieur (1b) est faite d'un produit d'isolation fibreux léger.

4. Réservoir de stockage de sel fondu à haute température à chemise à double couche selon l'une quelconque des revendications 1 à 3, **caractérisé en ce que** le fond de réservoir (3) consiste en un fond de réservoir intérieur (3a) et un fond de réservoir extérieur (3b), une couche d'isolation de fond de réservoir (9) est agencée entre le fond de réservoir intérieur (3a) et le fond de réservoir extérieur (3b), et le fond de réservoir extérieur (3b) est monté sur une fondation en béton armé (10).

5. Réservoir de stockage de sel fondu à haute température à chemise à double couche selon la revendication 4, **caractérisé en ce qu'**une conduite d'air froid (11) du fond de réservoir (3) est agencée sur le fond de réservoir extérieur (3b), et la conduite d'air froid (11) est agencée à une certaine distance de la fondation en béton armé (10).
